# EUROPÄISCHE PATENTSCHRIFT

(11) **EP 0 407 485 B1**
(45) Veröffentlichungstag und Bekanntmachung des Hinweises auf die Patenterteilung: **17.01.1996**
(21) Anmeldenummer: 89910423.6
(22) Anmeldetag: 23.09.1989
(51) Int. Cl.: H02J 7/14

(54) **Verfahren zur Regelung eines Fahrzeug-Drehstrom Generators**
Process for controlling a motor vehicle three-phase-alternator
Procédé pour commander un alternateur triphasé de véhicule

(30) Priorität: 22.12.1988 DE 3843163
(43) Veröffentlichungstag der Anmeldung: 16.01.1991
(73) Patentinhaber: ROBERT BOSCH GMBH, D-70442 Stuttgart (DE)
(72) Erfinder: MEYER, Friedhelm, D-7132 Illingen (DE)
(86) Internationale Anmeldenummer: DE8900604
(87) Internationale Veröffentlichungsnummer: WO9007217

(56) Entgegenhaltungen:
- EP-A- 0 210 819
- DE-A- 1 538 320
- DE-A- 2 940 664
- DE-A- 3 309 447
- DE-A- 3 423 767
- US-A- 3 582 762

## Beschreibung

### Stand der Technik

Die Erfindung geht aus von einem Verfahren zur Regelung eines Fahrzeug-Drehstrom-Generators nach der Gattung des Hauptanspruchs. Ein solches Verfahren ist aus der EP-A-0 210 819 bekannt

Zur Energieversorgung des Kraftfahrzeugs werden heute vorzugsweise Drehstrom-Generatoren verwendet. Diese Generatoren erzeugen eine Wechselspannung bzw. einen Wechselstrom, der in einer dem Generator nachgeschalteten Gleichrichteranordnung gleichgerichtet wird und zur Versorgung der Verbraucher sowie zum Aufladen der Batterie verwendet wird. Da die Ausgangsspannung des Drehstrom-Generators erheblich von der Generatordrehzahl abhängt, muß zur Erzielung der gewünschten konstanten Ausgangsspannung ein Spannungsregler verwendet werden.

Beim fremderregten Generator beeinflußt dabei der Spannungsregler den Generatorerregerstrom so, daß die Generatorausgangsspannung trotz erheblich veränderlicher Generatordrehzahl zwischen Leerlauf und Vollast und trotz erheblicher Belastungsschwankungen des Generators einen konstanten Wert einhält, beispielsweise 14 Volt.

Probleme bei der Energieversorgung im Kraftfahrzeug ergeben sich aber im Winter oder im Stadtverkehr, denn bei Kälte nimmt der Innenwiderstand der Batterie erheblich zu, so daß deren Kaltstartleistung erheblich absinkt. Außerdem ergeben sich Energieversorgungsprobleme bzw. Batterieladeprobleme bei niedrigen Drehzahlen. Es wird daher versucht, die Stromabgabe von Drehstrom-Generatoren so zu steuern, daß sich eine Erhöhung der Ausnützung der Drehstrom-Generatoren ergibt. Dazu wird beispielsweise in der SE-PS 7 702 656-5 vorgeschlagen, mit einem Temperatursensor die Batterietemperatur zu erfassen und dem Spannungsregler zuzuleiten. Bei niedriger Batterietemperatur erhöht dann der Spannungsregler aufgrund des Meßsignals des Temperatursensors die Ausgangsspannung des Generators, bei hoher Temperatur erniedrigt er die Ausgangsspannung des Generators.

Aus der DE-OS 34 23 767 ist ein Spannungsregler für einen Generator bekannt, der eine Batterie in einem Kraftfahrzeug lädt. Die Temperatur dieser Batterie wird mit einem Temperatursensor gemessen, dabei wird dem Regler eine zur Batterietemperatur proportionale Spannung zugeführt. Es ist weiterhin vorgesehen, im Spannungsregler selbst eine interne Temperaturerfassung vorzusehen, die dann zur Regelung der Generatorausgangsspannung verwendet wird, wenn der Batterietemperatursensor einen Defekt aufweist. Die Berücksichtigung der Batterietemperatur bzw. der Reglertemperatur selbst bei der Spannungsregelung ermöglicht eine Verbesserung der Ladebilanz durch Erhöhung der Generatorausgangsspannung insbesondere bei tiefen Temperaturen.

Trotz der bekannten Maßnahmen ist die ausreichende Energieversorgung im Kraftfahrzeug vor allem durch eine im Zuge der Entwicklung noch weiter steigende Zahl von Verbrauchern weiterhin problematisch.

Der Erfindung liegt daher die Aufgabe zugrunde, einen Fahrzeug-Drehstrom-Generator so zu regeln, daß er unter Berücksichtigung der stark schwankenden Generatordrehzahl eine optimale Leistungsabgabe ermöglicht und trotzdem vor thermischer Überlastung geschützt ist.

### Vorteile der Erfindung

Das erfindungsgemäße Verfahren zur Spannungsregelung eines Fahrzeug-Drehstom-Generators hat gegenüber dem Bekannten den Vorteil, daß der Generator, falls große Leistungsabgabe erforderlich ist, in einem übererregten Bereich betrieben werden kann, so daß er die maximal mögliche Leistung abgibt, gleichzeitig wird verhindert, daß der Generator infolge thermischer Überhitzung zerstört wird. Da die Temperaturmessung im Spannungsregler selbst erfolgt und da der Spannungsregler auf der Anschlußplatte des Gleichrichters befestigt ist, ist sichergestellt, daß durch direkte Kopplung die für die thermische Belastung relevante Temperatur gemessen wird.

Der Generator kann infolge der vorteilhaften Temperaturmessung solange im übererregten Bereich betrieben werden, bis die Temperatur einen kritischen Wert erreicht. Durch anschließendes Reduzieren des Erregerstroms ist sichergestellt, daß die Temperatur des Generators bzw. des Reglers wieder absinkt.

Durch die in den Unteransprüchen aufgeführten Merkmale sind vorteilhafte Weiterbildungen und Verbesserungen des im Hauptanspruch angegebenen Verfahrens zur Spannungsregelung möglich. Besonders vorteilhaft ist es, den Temperaturmeßkreis innerhalb der Reglerinnenschaltung auszubilden.

### Zeichnung

Anhand der Zeichnungen wird die Erfindung in der nachfolgenden Beschreibung näher erläutert. Dabei zeigt Figur 1 den Verlauf des Generatorausgangsstromes, der Diodentemperatur sowie des Erregerstromes über der Generator-Drehzahl für eine konstante Ausgangsspannung des Generators. Figur 2 zeigt einen Fahrzeug-Drehstrom-Generator und Figur 3 eine schematische Blockdarstellung einer elektrischen Schaltung, aus welcher die für sich gesehen bekannten Schaltungsverbindungen zwischen Regler, Batterie und Drehstromgenerator mit seinen wesentlichen Baukomponenten hervorgehen.

### Beschreibung

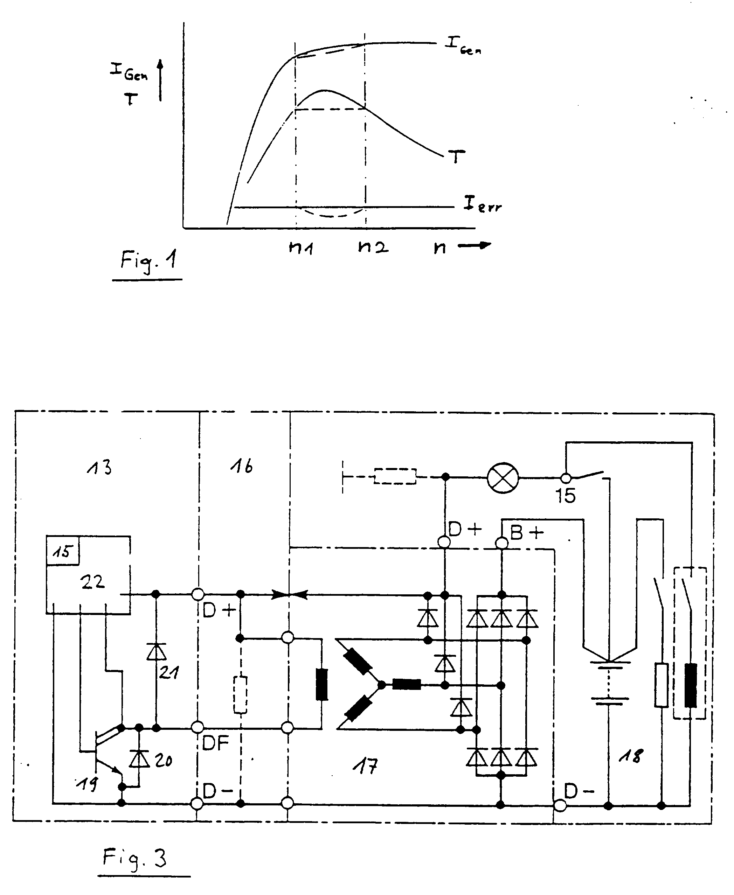

In Figur 1 ist ein Diagramm angegeben, das den prinzipiellen Verlauf von Generatorausgangsstrom I_{Gen} sowie Diodentemperatur T über der Generatordrehzahl für eine konstante Ausgangsspannung des Generators wiedergibt. Dabei sind die durchgezogenen Linien bei konstantem Erregerstrom Iₑᵣᵣ gültig. In einem Drehzahlbereich zwischen n1 und n2 nimmt die Temperatur unzulässig hohe Werte an, wenn der Erregerstrom Iₑᵣᵣ höher als der Nennerregerstrom des Generators gewählt wird, oder wenn beispielsweise eine hohe Umgebungstemperatur herrscht, es wird deshalb erfindungsgemäß vorgeschlagen, in diesem Drehzahlbereich den Erregerstrom soweit zurückzunehmen, daß die Temperatur den in Figur 1 gestrichelt eingezeichneten Verlauf nimmt. Der zugehörige Erregerstrom im Bereich zwischen n1 und n2 ist ebenfalls gestrichelt eingetragen. Durch Reduzierung des Erregerstromes im Drehzahlbereich zwischen n1 und n2 wird auch der Generatorstrom in diesem Bereich etwas langsamer ansteigen, er wird beispielsweise den in Figur 1 gestrichelt eingezeichneten Verlauf nehmen. Der Drehzahlbereich n1 ≤ n ≤ n2, in dem die Diodentemperatur zu hohe Werte erreichen kann, ist nicht ohne weiteres im voraus festzulegen, da er von äußeren Einflüssen, z. B. von der Umgebungstemperatur abhängt, es wird daher eine maximale Diodentemperatur festgelegt, die noch nicht zur thermischen Überlastung des Generators führt. Die Messung dieser Temperatur wird im weiteren Verlauf dieser Ausführungen beschrieben.

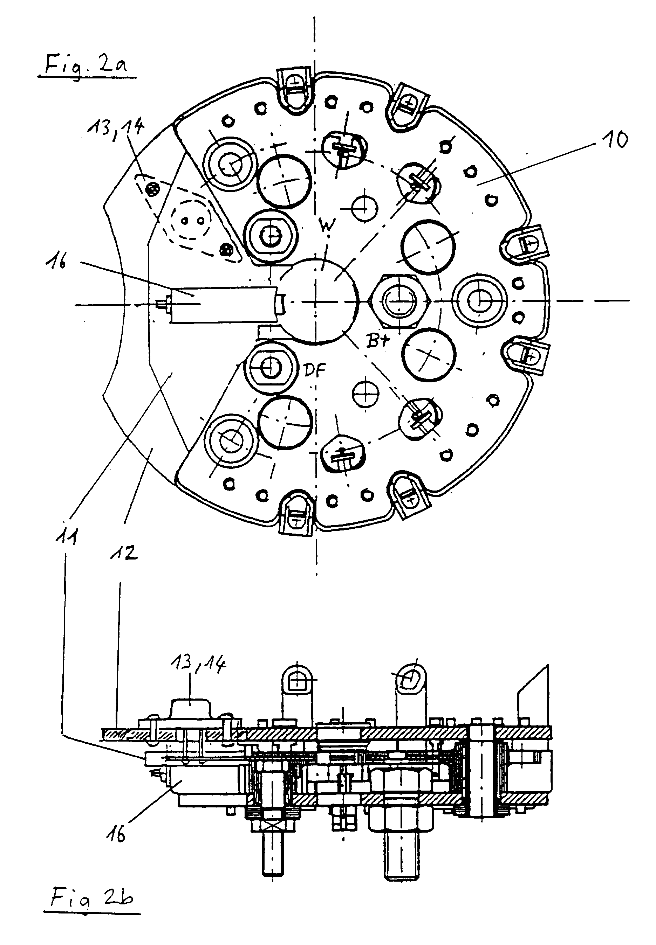

Figur 2 zeigt die ausschnittsweise Darstellung eines bekannten Drehstrom-Generators mit einem Spannungsregler. Dabei zeigt Figur 2a die axiale Draufsicht und Figur 2b eine Seitenansicht. Zur Vereinfachung sind nur die erfindungswesentlichen Teile näher bezeichnet.

In Figur 2a ist in axialer Draufsicht der Pluskühlkörper 10, der die jeweiligen Plusdioden der nicht dargestellten Gleichrichterbrücke trägt, mit den Anschlüssen B+, W und DF zu erkennen. Der Pluskühlkörper 10 ist über die Anschlußplatte 11 mit dem Minuskühlkörper 12, der die Minusdioden enthält, gekoppelt. Der Spannungsregler 13 ist mit seinem Gehäuse 14 auf einem Generatorbauteil, im Ausführungsbeispiel auf dem Minuskühlkörper 12 des nicht dargestellten Gleichrichters befestigt. Dadurch wird eine direkte Kopplung des Minuskühlkörpers 12 mit dem Gehäuse 14 des Spannungsreglers 13 erzielt. Die im Reglergehäuse 14 befindliche Schaltung enthält einen im Ausführungsbeispiel nicht näher dargestellten Temperaturmeßkreis 15, der die Gehäusetemperatur mißt und bei der vorgesehenen guten thermischen Kopplung damit auch nahezu fehlerlos die Temperatur des Minuskühlkörpers 12 mißt.

Der Bürstenhalter 16 ist auf der Anschlußplatte 11 befestigt, er kann aber auch an einer anderen Stelle, z.B. am Minuskühlkörper 12 befestigt werden.

In Figur 3 ist schematisch ein Drehstrom-Generator 17, der ein Bordnetz 18 mit Energie versorgt, dargestellt. Die Regelung der Generatorausgangsspannung erfolgt mit einem Spannungsregler 13, der über den Bürstenhalter 16 mit dem Drehstrom-Generator 17 verbunden ist. Der Generator 17, mit den Klemmen D+, B+, DF und D-, das Bordnetz 18 sowie der Bürstenhalter 16 sind in üblicher Weise aufgebaut und sollen an dieser Stelle nicht näher beschrieben werden.

Der Spannungsregler 13 mit den Ausgangsklemmen D+, DF und D- enthält ein allgemein übliches Schaltelement, beispielsweise einen Schalttransistor 19 mit einer parallel geschalteten Diode 20, die zwischen die Reglerklemmen DF und D- geschaltet ist sowie eine Freilaufdiode 21, die zwischen DF und B+ liegt. Weiterhin enthält der Spannungsregler 13 eine nicht näher dargestellte Schaltungsanordnung 22, die zwischen die Klemmen D+, DF und D- sowie an die Basis des Transistors 18 sowie seinen Kollektor angeschlossen ist.

Diese Schaltungsanordnung 22 enthält den Temperaturmeßkreis 15, der die Gehäusetemperatur des Spannungsreglers 13 mißt. Diese Schaltungsanordnung 22 kann noch weitere Zusatzfunktionen umfassen, beispielsweise eine Fehleranzeigemöglichkeit, eine Vorrichtung zur Auswertung von Motorfunktionen, es kann auch ein Temperaturfühler an der Batterie vorgesehen werden, dessen Ausgangssignal der Schaltungsanordnung 21 zugeführt wird.

Der Spannungsregler 13 mit der den Temperaturmeßkreis 15 enthaltenden Schaltung 21 kann auch Bestandteil eines Generators mit gesteuerten Gleichrichtern, beispielsweise Thyristoren, sein. Er kann beispielsweise in monolitischer Bauform ausgeführt sein.

Auch bei einem Generator mit Permanenterregung kann ein solcher Spannungsregler mit einem internen Temperaturmeßglied direkt auf dem Generator befestigt werden. Bei einem solchen Generator wird direkt der Generatorausgangsstrom verringert, wenn die vom im Spannungsregler enthaltenen Temperaturmeßkreis erfaßte Temperatur einen vorbestimmbaren Wert übersteigt.

## Patentansprüche

1. Verfahren zur Regelung eines Fahrzeug-Drehstrom-Generators (17), der eine Gleichrichteranordnung umfaßt, mit einem Spannungsregler (13) zur Regelung der Generatorausgangsspannung, wobei der Spannungsregler (13) eine Schaltungsanordnung (22) enthält, die Mittel zur Temperaturerfassung (15) aufweist, die mit einem Generatorbauteil oder der Gleichrichteranordnung thermisch gekoppelt sind, dadurch gekennzeichnet, daß der Fahrzeug-Drehstrom-Generator in einem übererregten Zustand mit einem über den Nennerregerstrom des Generators erhöhten Erregerstrom betreibbar ist, daß ab dem Erreichen einer ersten vorgebbaren Schwelle, die eine vorgebbare Temperatur (T) oder eine erste vorgebbare Drehzahl (n1) ist, der Erregerstrom (I_{Err}) abgesenkt wird und nach Erreichen einer zweiten vorgebbaren Schwelle, die die vorgebbare Temperatur (T) oder eine zweite vorgebbare Drehzahl (n2) ist, der Erregerstrom (I_{Err}) wieder angehoben wird, wobei der Drehzahlbereich zwischen der ersten und der zweiten vorgebbaren Drehzahlschwelle (n1, n2) Drehzahlen umfaßt, bei denen die Temperatur bei einem über den Nennerregerstrom des Generators erhöhten Erregerstrom oder hoher Umgebungstemperatur unzulässig hohe Werte erreicht.

2. Verfahren nach Anspruch 1, dadurch gekennzeichnet, daß der Erregerstrom (I_{Err}) des Fahrzeug-Drehstrom-Generators (17) für Drehzahlen, die kleiner sind als die Drehzahl (n1) höher gewählt wird als der Nennerregerstrom und die Absenkung des Erregerstromes zwischen der ersten und der zweiten vorgebbaren Drehzahlschwelle (n1, n2) so erfolgt, daß die Temperatur des Spannungsreglers (13) einen vorbestimmten Wert nicht übersteigt.

3. Verfahren nach Anspruch 1 oder 2, dadurch gekennzeichnet, daß eine maximale Temperatur festgelegt wird, bei deren Erreichen der Erregerstrom (I_{Err}) abgesenkt wird, wobei die Temperaturmessung an einer für die Feststellung der thermischen Belastung relevanten Stelle erfolgt.

4. Verfahren nach einem der vorhergehenden Ansprüche, dadurch gekennzeichnet, daß dem Spannungsregler (13) weitere Betriebsparameter, insbesondere zusätzliche Informationen über die Motorfunktionen zugeführt werden.

5. Verfahren nach einem der vorhergehenden Ansprüche, dadurch gekennzeichnet, daß eine Fehleranzeige vom Spannungsregler (13) ausgelöst wird.

## Claims

1. Method for controlling a vehicle three-phase alternator (17) which comprises a rectifier arrangement, with a voltage regulator (13) for controlling the alternator output voltage, the voltage regulator (13) containing a circuit arrangement (22) which has means for temperature detection (15) that are thermally coupled to an alternator component or to the rectifier arrangement, characterized in that, in an over-excited state, the vehicle three-phase alternator can be operated with an excitation current increased above the rated excitation current of the alternator, in that once a first predeterminable threshold has been reached, which is a predeterminable temperature (T) or a first predeterminable rotational speed (n1), the excitation current (Iₑᵣᵣ) is lowered and, after a second predeterminable threshold has been reached, which is the predeterminable temperature (T) or a second predeterminable rotational speed (n2), the excitation current (Iₑᵣᵣ) is raised again, the rotational speed range between the first and the second predeterminable rotational speed threshold (n1, n2) including rotational speeds at which the temperature reaches impermissibly high values in the case of an excitation current increased above the rated excitation current of the alternator or in the case of a high ambient temperature.

2. Method according to Claim 1, characterized in that, for rotational speeds which are lower than the rotational speed (n1), the excitation current (Iₑᵣᵣ) of the vehicle three-phase alternator (17) is chosen to be higher than the rated excitation current, and the lowering of the excitation current between the first and the second predeterminable rotational speed threshold (n1, n2) is performed in such a way that the temperature of the voltage regulator (13) does not exceed a predetermined value.

3. Method according to Claim 1 or 2, characterized in that a maximum temperature is fixed and the excitation current (Iₑᵣᵣ) is lowered when this is reached, the temperature measurement being effected at a point relevant for the determination of the thermal loading.

4. Method according to one of the preceding claims, characterized in that further operating parameters, in particular additional information on the engine functions are fed to the voltage regulator (13).

5. Method according to one of the preceding claims, characterized in that a fault indication is triggered by the voltage regulator (13).

## Revendications

1. Procédé de régulation d'un alternateur triphasé de véhicule (17), qui comprend un redresseur, avec un régulateur de tension (13) pour assurer la régulation de la tension de sortie de la génératrice, le régulateur de tension (13) contenant un circuit (22) qui présente des moyens pour détecter la température (15), qui sont couplés thermiquement à un composant de la génératrice ou au redresseur, procédé caractérisé en ce qu'on peut faire fonctionner l'alternateur triphasé du véhicule dans un état excité avec un courant d'excitation supérieur au courant d'excitation nominal de la génératrice, en ce qu'à partir du moment où l'on a atteint un premier seuil que l'on peut prédéfinir, qui est une température prédéfinissable (T) ou une première vitesse de rotation (n1) prédéfinissable, on abaisse le courant d'excitation (I_{Err}) et lorsqu'on a atteint un second seuil prédéfinissable, qui est la température prédéfinissable (T) ou une seconde vitesse de rotation prédéfinissable (n2), on remonte à nouveau le courant d'excitation (I_{Err}), la zone des vitesses de rotation qui est comprise entre le premier et le second seuil prédéfinissable de vitesses de rotation (n1, n2) comprenant des vitesses de rotation, auxquelles la température atteint des valeurs élevées inacceptables dans le cas d'un courant d'excitation montant au-dessus du courant nominal d'excitation de la génératrice ou dans le cas d'une température ambiante élevée.

2. Procédé selon la revendication 1, caractérisé en ce qu'on choisit le courant d'excitation (I_{Err}) de l'alternateur triphasé du véhicule (17), pour des vitesses de rotation, qui sont plus petites que la vitesse de rotation (n1) à une valeur plus élevée que celle du courant nominal d'excitation et que la baisse du courant d'excitation entre le premier seuil et le second seuil prédéfinissables des vitesses de rotation (n1, n2) a lieu de telle façon que la température du régulateur de tension (13) ne dépasse pas une valeur prédéterminée.

3. Procédé selon la revendication 1 ou 2, caractérisé en ce que l'on détermine une valeur maximale de la température, le courant d'excitation (I_{Err}), lorsqu'elle est atteinte, étant abaissé, la mesure de la température ayant lieu en un endroit convenable pour la détermination de la charge thermique.

4. Procédé selon l'une des revendications précédentes, caractérisé en ce que l'on amène au régulateur de tension (13) d'autres paramètres de fonctionnement, en particulier des informations supplémentaires sur le fonctionnement du moteur.

5. Procédé selon l'une des revendications précédentes, caractérisé en ce que l'on déclenche une indication de défauts du régulateur de tension (13)
